# FASCICULE DE BREVET EUROPEEN

(11) **EP 1 894 390 B1**
(45) Date de publication et mention de la délivrance du brevet: **04.03.2020**
(21) Numéro de dépôt: 06763600.1
(22) Date de dépôt: 08.06.2006
(51) Int. Cl.: H04L 29/08, H04L 29/06

(54) **PROCÉDÉ ET DISPOSITIF DE RESTITUTION DE DONNÉES MULTIMÉDIA TRANSMISES PAR UNE PASSERELLE À UN TERMINAL**
VERFAHREN UND VORRICHTUNG ZUR WIEDERGABE VON DURCH EINEN GATEWAY AN EIN ENDGERÄT ÜBERTRAGENEN MULTIMEDIADATEN
METHOD AND DEVICE FOR THE RESTITUTION OF MULTIMEDIA DATA TRANSMITTED BY A GATEWAY TO A TERMINAL

(30) Priorité: 22.06.2005 FR 0506351
(43) Date de publication de la demande: 05.03.2008
(73) Titulaire: Orange, 75015 Paris (FR)
(72) Inventeur: ROUCHY, Stéphane, 92794 Issy-Les-Moulineaux Cedex 9 (FR); DION, Christophe, 92794 Issy-Les-Moulineaux Cedex 9 (FR); MALLEDANT, Matthieu, 92794 Issy-Les-Moulineaux Cedex 9 (FR)
(74) Mandataire: Vidon Brevets & Stratégie
(86) Numéro de dépôt international: PCT/EP2006/063031
(87) Numéro de publication internationale: WO 2006/136501

(56) Documents cités:
- US-A1- 2003 228 866
- US-B1- 6 470 378

## Description

### 1. Domaine de l'invention

Le domaine de l'invention est celui de rendu de données multimédia par des terminaux depuis une passerelle. Plus précisément, l'invention concerne le rendu de données multimédia sur des terminaux hétérogènes, et en particulier sur des terminaux à capacité de traitement réduite, tels que des terminaux téléphoniques ou des télécommandes.

La grande majorité des terminaux de communication possèdent des caractéristiques techniques permettant le rendu de données multimédia, notamment sous la forme d'un écran et de haut-parleurs. Cependant, ces caractéristiques peuvent varier sensiblement d'un terminal à l'autre. Par exemple, les téléphones actuels comprennent généralement un écran, mais ce dernier ne permet pas la restitution de tous les types d'images. Certains écrans permettent uniquement la visualisation d'images de format réduit et/ou une animation de faible qualité. D'autres permettent de visualiser des films avec une qualité supérieure.

Les données multimédia, quant à elles, varient fortement, tant en terme de format que de taille, et nécessitent des moyens de restitution très différents les unes des autres.

### 2. Solutions de l'art antérieur

### 2.1 art antérieur

De ce fait, les fabricants de terminaux améliorent en permanence les capacités de ceux-ci en ajoutant des moyens de traitement toujours plus puissants, des mémoires de plus grande capacité, des écrans avec une meilleure définition, etc. Cela conduit à une augmentation de la complexité, du poids et surtout du coût des terminaux.

On a par ailleurs proposé des mécanismes de déport d'affichage graphique selon lesquels un serveur demande à un client dit « léger » d'exécuter pour son compte des opérations d'affichage sur un écran. Ces mécanismes de déport d'affichage graphique permettent d'exécuter des programmes qui contiennent des interfaces graphiques simplifiées sur un ordinateur et de restituer l'affichage de ces programmes sur un terminal distant.

Cette approche, qui est celle utilisée par le système X-Windows (marque déposée) notamment, présente une architecture client/serveur classique qui permet d'afficher sur un terminal X des applications fonctionnant sous n'importe quel système hôte ou serveur d'applications. Le serveur d'applications comprend une application cliente et une librairie cliente de communication avec le serveur X.

Le terminal distant (terminal X) doit disposer au minimum des capacités de gestion des fenêtres des applications (serveurX) et d'un pilote vidéo réalisant les affichages des fenêtres sur le terminal. Les informations en provenance du serveur d'applications sont restituées après traitement pour affichage par le terminal distant. Les échanges d'informations s'effectuent sur un réseau standard à l'aide du protocole de communication TCP/IP.

### 2.2 inconvénients de l'art antérieur

Un inconvénient de cette technique de l'art antérieur est que ces mécanismes de déport d'affichage ne conviennent pas aux terminaux ultra légers dont les capacités de traitement de l'information sont très limitées et qui ne possèdent pas d'environnements logiciels évolués (par exemple un téléphone domestique ou une télécommande). En effet, pour fonctionner, un terminalX, tel que celui évoqué précédemment requiert une configuration matérielle minimale non négligeable pour lui permettre d'exécuter des logiciels tels qu'un serveurX ou ses équivalents.

Un autre inconvénient de ces techniques de l'art antérieur est que les logiciels ne sont pas fragmentables au sein du terminal de communication. L'intégralité du logiciel doit être présente pour que le terminal puisse traiter l'information qui lui parvient.

Un autre inconvénient de cette technique de l'art antérieur est lié à la limitation de la bande passante. En effet, pour réaliser l'affichage des données de l'application distante le terminal doit recevoir un volume d'information important, qui a pour conséquence soit la congestion du réseau de communication utilisé pour transmettre les informations, soit l'impossibilité technique pour le terminal distant de prendre en charge les informations qui lui sont transmises. Pour pallier ces inconvénients de l'art antérieur, des procédés ont été mis en place, tels que la création de système de tamponnage (Proxy) qui permettent de stocker l'information en provenance du serveur le temps que le terminal ait eu le temps de traiter les informations qu'il a déjà reçu. Certains procédés consistent également en une amélioration des protocoles de communication utilisés ou à une augmentation des capacités des terminaux de communication distants. Ces procédés spécifiques ajoutent cependant encore des complexités au système. Encore un autre inconvénient de ces techniques de l'art antérieur est que les performances d'affichage, notamment la vitesse et la fluidité des applications fonctionnant sur le terminal sont fortement liées aux capacités des dispositifs graphiques contenus dans le terminal. Ces inconvénients sont renforcés dans le domaine des communications distantes, par le fait que dans certains lieux et/ou dans certaines situations, l'infrastructure des canaux de transmission de l'information ne permet pas le traitement de l'information dans de bonnes conditions même si, dans l'absolu, le terminal le permet. Enfin, ces techniques restent complexes et coûteuses et supposent d'une part une infrastructure spécifique et d'autre part des techniques qui présentent des moyens de traitement assez lourds. Le document US 6 470 378 présente une méthode dans laquelle un contenu multimédia est modifié par un serveur en fonction des capacités de restitution du terminal. Le document US 2003/228866 présente une méthode de transmission, par un serveur, de commandes à exécuter dans une machine virtuelle d'un terminal.

### 3. Objectifs de l'invention

L'invention a notamment pour objectif de pallier ces inconvénients de l'art antérieur. Plus précisément, un objectif de l'invention est de fournir une technique de rendu des données multimédia complexes qui soit adapté aux capacités de traitement hétérogènes de différents terminaux, particulièrement adaptée aux terminaux dits ultra-léger.

Un autre objectif de l'invention est de permettre la mise en œuvre d'une architecture permettant une fragmentation des logiciels utilisés par le terminal de communication ultra léger.

Encore un autre objectif de l'invention est de permettre la mise en œuvre d'une architecture s'affranchissant des limitations de bande passante sans faire appel à des mécanismes complémentaires.

L'invention a encore pour objectif d'assurer des performances maximales des applications de rendu des données multimédia.

En d'autres termes, l'invention a pour objectif de fournir une telle technique, qui permette de faire fonctionner des applications de rendu multimédia de façon optimale même avec des capacités réduites.

Un autre objectif de l'invention est de fournir une telle technique, qui permet d'optimiser les traitements effectués par chaque terminal, en fonction de ses capacités.

Par ailleurs, l'invention a pour objectif de fournir une telle technique qui permet de fournir des terminaux ultra légers, peu coûteux et sans moyens complexes de traitement, de façon simple et efficace.

### 4. Résumé de l'invention

Ces objectifs, ainsi que d'autres qui apparaîtront par la suite, sont atteints à l'aide d'un procédé de restitution de données multimédia transmises par une passerelle à un terminal de communication, via un premier canal de transmission.

Selon l'invention, un tel procédé comprend les étapes suivantes :
- interrogation dudit terminal par ladite passerelle sur ses capacités de restitution desdites données multimédia ;
- transmission à ladite passerelle par ledit terminal d'une liste de commandes de restitution qu'il est capable d'exécuter ;
- transmission par ladite passerelle, audit terminal, d'une suite de commandes de restitution faisant partie de ladite liste de commandes exécutables par le terminal, ladite suite de commandes étant représentative des données multimédia ;
- restitution dans ledit terminal desdites données multimédia à l'aide de ladite suite de commandes de restitution reçues.

Ainsi, l'invention repose sur une approche nouvelle de la restitution des données multimédia à destination d'un terminal de communication selon laquelle on interroge préalablement le terminal sur ses propres capacités et moyens afin de faire en sorte qu'il soit toujours en mesure de restituer lesdites données.

En d'autres termes, l'invention repose sur une approche dynamique de la restitution des données multimédia en tenant compte des capacités de restitution du terminal. Ainsi, la passerelle ne transmet au terminal que des ordres que ledit terminal est en mesure d'exécuter.

Cela signifie que, pour une même restitution de données multimédia, deux terminaux différents ne recevront pas forcément les mêmes ordres de la part de la passerelle.

L'invention permet donc entre autres de répartir dynamiquement les traitements, en fonction des capacités du terminal (mémoire, CPU...) et/ou de la charge du réseau de communication (bande passante...).

De façon préférentielle, la restitution de données multimédia comprend une étape de transformation d'au moins une commande complexe, non présente dans ladite liste, en au moins une commande présente dans ladite liste.

Ainsi, lorsqu'un terminal n'est pas à même de reproduire, par ses seules capacités, une commande de restitution complexe, cette étape permet à la passerelle de calculer une suite de commandes simples à exécuter par le terminal afin que ce dernier puisse tout de même restituer les données multimédia.

Cette étape, dite par la suite d'interpolation, permet par exemple à la passerelle de substituer une commande d'affichage d'un cercle, qui est complexe pour le terminal considéré, par une suite de commande d'affichage de points sur l'écran, produisant ainsi le cercle souhaité.

Avantageusement, la restitution des données multimédia comprend une étape de sélection d'un ensemble d'au moins une commande à transmettre audit terminal, parmi au moins deux ensembles possibles d'au moins une commande permettant d'effectuer une opération prédéterminée.

Ainsi, par exemple, lorsque qu'un même élément de données multimédia peut être produit par le terminal de plusieurs manières différentes, la passerelle est à même d'effectuer un choix parmi ces différentes possibilités. Par exemple, si l'élément de données multimédia à restituer par le terminal est un cercle, et que celui-ci dispose des fonctions d'affichage de points à l'écran et d'affichage d'images à l'écran, alors la passerelle dispose de deux possibilités d'affichage du cercle :
- transmettre le cercle à afficher point par point au terminal ;
- transmettre une image de ce cercle afin que le terminal affiche directement l'image ;

Différents critères de sélection d'une des possibilités sont envisageables.

De façon avantageuse, l'étape de sélection tient compte de statistiques permettant de déterminer l'ensemble de commandes présentant la meilleure performance selon un critère prédéterminé.

Ces statistiques peuvent être gérées par la passerelle afin de lui donner des critères de choix pertinents lorsqu'il est en mesure de demander la restitution des données multimédia de plusieurs manières différentes.

Ainsi, en reprenant l'exemple de l'affichage du cercle, et en disposant de statistiques, la passerelle est à même de réaliser un choix plus judicieux des ensembles de commandes à transmettre, par exemple en comparant les temps respectifs d'affichage d'un ensemble de points et d'une image.

Avantageusement, ledit critère prédéterminé tient compte d'une information représentative d'un niveau d'activité dudit terminal.

Ce niveau d'activité peut être représenté par des moyennes de temps d'exécution des commandes envoyées au terminal ou encore d'une indication sur le niveau de charge du processeur du terminal. Ce niveau d'activité peut également, par exemple, être basé sur le volume de mémoire nécessaire au terminal pour effectuer l'opération demandée.

Préférentiellement, ledit critère prédéterminé tient également compte d'une information représentative dudit premier canal de transmission courant et/ou d'une information représentative d'un débit utile disponible entre ladite passerelle et ledit terminal.

Cette information représentative dudit premier canal de transmission comprend avantageusement une indication du type de standard de communication disponible pour ledit terminal, par exemple BLUETOOTH, WIFI, ETHERNET (marques déposées). On peut ainsi déterminer une liste des commandes à transmettre au terminal en fonction d'un volume de données nécessaire pour transmettre les commandes.

Avantageusement, le procédé comprend aux moins deux étapes de restitution des données multimédia respectivement pour au moins deux terminaux de manière simultanée.

Ainsi, il est possible de réaliser la restitution de données multimédia sur plusieurs terminaux simultanément. La passerelle peut par exemple commander la restitution d'un premier flux de données multimédia à un premier terminal tout en commandant la restitution d'un second flux de données multimédia à un second terminal.

L'invention concerne également une passerelle destinée à communiquer avec au moins un terminal comprenant des moyens de restitution de données multimédia transmises par ladite passerelle, comprenant :
- des moyens d'interrogation dudit terminal par ladite passerelle sur ses capacités de restitution desdites données multimédia ;
- des moyens de transmission, audit terminal, d'au moins une suite de commandes de restitution faisant partie d'une liste de commandes de restitution exécutables par le terminal, fournie préalablement par ce dernier, ladite suite de commandes étant représentative des données multimédia.

Avantageusement, une telle passerelle comprend des moyens de conversion d'au moins une commande non présente dans ladite liste en au moins une commande présente dans ladite liste.

De façon préférentielle, une telle passerelle comprend également des moyens de sélection d'un ensemble d'au moins une commande à transmettre audit terminal, parmi au moins deux ensembles possibles d'au moins une commande permettant d'effectuer une opération prédéterminée.

L'invention concerne encore un terminal comprenant des moyens de restitution de données multimédia transmises par une passerelle, comprenant :
- des moyens de réception d'une interrogation émise par ladite passerelle et relative aux capacités de restitution dudit terminal ;
- des moyens de transmission à ladite passerelle d'une liste de commandes de restitution qu'il est capable d'exécuter,
- des moyens de réception d'une suite de commandes de restitution émise par ladite passerelle, faisant partie de la liste de commandes de restitution, ladite suite de commandes étant représentative des données multimédia.

L'invention concerne encore un produit programme d'ordinateur téléchargeable depuis un réseau de communication et/ou stockable sur un support lisible par ordinateur, le produit étant adapté pour, lorsque exécuté par un microprocesseur, effectuer des instructions de code de programme pour :
- la réception dans un terminal d'une interrogation émise par une passerelle de transmission de données multimédia et relative aux capacités de restitution dudit terminal ;
- la transmission à ladite passerelle par ledit terminal d'une liste de commandes de restitution qu'il est capable d'exécuter ; et
- la réception , en provenance de la passerelle, par ledit terminal d'une suite de commandes de restitution faisant partie de la liste de commandes de restitution, ladite suite de commandes étant représentative de données multimédia à restituer.

L'invention concerne encore un produit programme d'ordinateur téléchargeable depuis un réseau de communication et/ou stockable sur un support lisible par ordinateur, le produit étant adapté pour, lorsque exécuté par un microprocesseur, effectuer des instructions de code de programme pour :
- l'interrogation d'un terminal par une passerelle de transmission de données multimédia sur ses capacités de restitution desdites données multimédia ;
- la transmission par ladite passerelle, audit terminal, d'au moins une suite de commandes de restitution faisant partie d'une liste de commandes de restitution exécutables par
le terminal, fournie préalablement par ce dernier, ladite suite de commandes étant représentative des données multimédia.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique, du traitement de restitution de données multimédia transmises par une passerelle à un terminal de communication, via un canal de transmission, en vue de provoquer un rendu optimisé desdites données, selon l'invention ;
- la figure 2 illustre l'architecture logicielle permettant la restitution des données multimédia par le terminal ;
- la figure 3 décrit la structure logique du flux d'information et de traitement aboutissant à la restitution des données multimédia par le terminal ;
- les figures 4 et 5 décrivent le protocole servant de base de communication entre la passerelle et le terminal ;
- la figure 6 illustre, de façon schématique, la structure matérielle du terminal de la figure 1 ;
- la figure 7 illustre, de façon schématique, la structure matérielle de la passerelle de la figure 1.
- les figures 8 et 9 décrivent la structure des paquets de commandes ainsi que la structure des entêtes des commandes transmises par la passerelle au terminal

### 6. Description détaillée de l'invention

### 6.1 Rappel du principe de l'invention

Dans le cadre de la présente invention, on s'intéresse donc au rendu de données multimédia complexes par un terminal de communication ultra léger en se basant sur les capacités dudit terminal, et en fonction de paramètres, et notamment, l'état courant d'un canal de transmission vers ledit terminal, et/ou les performances du terminal.

Par terminal ultra léger on entend ici par exemple un téléphone ou une télécommande.

Le principe général de l'invention repose donc sur la prise en compte des capacités du terminal afin de lui fournir des commandes simples qu'il est toujours en mesure d'exécuter. Cette suite de commandes simples est calculée par une passerelle et expédiée au terminal. L'exécution de l'ensemble de ces commandes simples permet au terminal de restituer les données multimédia complexes, ce dont il serait incapable s'il avait du effectuer le traitement de restitution à l'aide de ses seules capacités.

La passerelle, présente par exemple au domicile d'un détenteur d'un terminal, comprend des moyens de traitement (permettant d'effectuer les traitements nécessaires) et des moyens de connexion, le cas échéant, à des serveurs distants, par exemple par l'intermédiaire d'une connexion au réseau Internet.

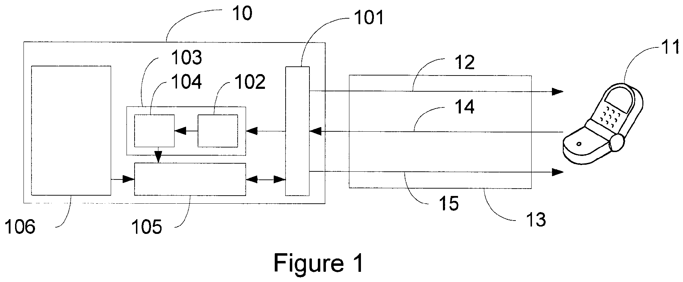

La figure 1 est une illustration simplifiée d'un exemple d'architecture mettant en œuvre un mode de réalisation de l'invention. La passerelle 10 émet, selon l'invention, une requête 12 à destination d'un terminal de communication 11 au travers d'un canal de transmission 13 en utilisant le serveur de communication 101, nommé dispatcher.

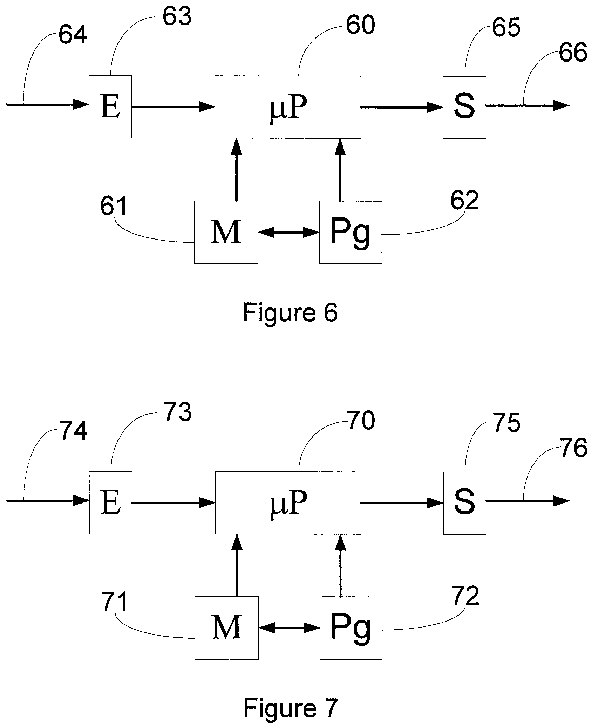

La structure du terminal 11 est illustrée schématiquement par la figure 6. Il comprend une mémoire M 61, et une unité de traitement 60 équipée d'un microprocesseur µP, qui est piloté par un programme d'ordinateur (ou application) Pg 62. L'unité de traitement 60 reçoit en entrée, via un module d'interface d'entrée réseau E 63, des commandes serveur 64, que le microprocesseur µP traite, selon les instructions du programme Pg 62, pour générer des requêtes et/ou des réponses 66, qui sont transmises via un module d'interface de sortie réseau S 65.

La structure de la passerelle 10 est illustrée schématiquement par la figure 7. Il comprend également une mémoire M 71, et une unité de traitement 70 équipée d'un microprocesseur µP, qui est piloté par un programme d'ordinateur (ou application) Pg 72. L'unité de traitement 70 reçoit en entrée, via un module d'interface d'entrée réseau E 73, des requêtes et/ou des réponses clients 74, que le microprocesseur µP traite, selon les instructions du programme Pg 72, pour générer des commandes et/ou des réponses 76, qui sont transmises via un module d'interface de sortie réseau S 75.

La requête 12 sollicite le terminal 11 afin que celui-ci fournisse à la passerelle 10, sous la forme d'une réponse 14, une liste des commandes de restitution 102 qu'il est capable d'exécuter. Une telle liste peut contenir un ensemble plus ou moins volumineux de commandes, suivant les capacités du terminal. Cette liste peut comprendre des commandes telles que :
- « afficherpixel », permettant d'afficher un pixel sur l'écran du terminal ;
- « afficherimage » permettant d'afficher une image sur l'écran du terminal ;
- « jouernote » permettant de jouer une note de musique sur le haut parleur du terminal ;

Une requête de sollicitation peut également être émise par le terminal lorsque l'utilisateur souhaite obtenir des informations. Cette requête de sollicitation est alors une étape préliminaire supplémentaire à l'échange d'une liste entre la passerelle et le terminal.

La passerelle 10 stocke la liste 102 des commandes exécutables par le terminal 11 au sein d'un serveur de correspondances de librairies multimédia 103 et construit une table d'interpolation 104, permettant de transformer chaque commande complexe non exécutable par le terminal en une suite de commandes simples exécutables par le terminal.

La table d'interpolation 104 est ensuite utilisée au sein d'un environnement d'exécution 105 (serveur d'application, par exemple), par une ou plusieurs applications, pour restituer les données multimédia 106 sous la forme d'une liste de commande simples 15 qui seront exécutées par le terminal de communication 11.

Le terminal de communication fait parvenir ses réponses et ses acquittements de commande à la passerelle ; Ces acquittements peuvent par exemple être utilisés par le serveur 103 pour compléter la liste des commandes 102 et la table d'interpolation 104 avec des informations sur la vitesse d'exécution des commandes envoyées au terminal. Ces informations statistiques peuvent alors être utilisées lors des envois de commande suivants pour définir les meilleures commandes (celles présentant une exécution plus rapide) à envoyer au terminal.

Les données multimédia 106 peuvent par exemple être de type textuel, photographique, vidéographique, musical, vibratoire, odorante,... et leurs combinaisons. Elles peuvent indifféremment être stockées sur le serveur, transformées et transmises au terminal ou encore être issue d'un autre environnement et n'être que transformées par le serveur et émises à destination du terminal.

Un exemple particulier d'implémentation du processus de la figure 1 peut être obtenu à partir du socle technique suivant, qui comprend :
- une passerelle 10, comprenant :
   - un serveur de communication 101 gérant les communications entre le serveur et les terminaux. Il est chargé de transmettre les données de la passerelle 10 aux terminaux et réciproquement. C'est lui qui expédie les requêtes et/ou les commandes et réceptionne les réponses et/ou les acquittements des terminaux ;
   - un serveur de correspondances de librairies multimédia 103, chargé d'établir les interpolations entre les commandes simples et les commandes complexes de restitution des données multimédias. Ce serveur peut être implémenté sous la forme d'une application fonctionnant dans une machine virtuelle Java. C'est lui qui réceptionne la liste 102 et construit la table d'interpolation 104 qui sert par la suite. La table d'interpolation peut être constituée à partir d'une base de données interne 103 propre au serveur ou encore être construite à partir d'une base de données distante et accessible par le réseau Internet ;
   - un serveur d'application 105 chargé d'exécuter les applications de restitution des données multimédia à partir des informations fournies par le serveur de correspondance et de transmettre le résultat de ses traitements au serveur de communication en vue de l'exécution par le terminal 11 ;

Dans une variante de réalisation de l'invention, il est également possible de ne pas implémenter le serveur d'application 105 au sein de la passerelle 10 et d'utiliser un serveur d'application distant, présent sur le réseau Internet par exemple, pour exécuter les applications ;
- un terminal de communication 11, comprenant :
   - des capacités de communication permettant d'accepter des commandes et de fournir des réponses à la passerelle 10 ;
   - des capacités d'exécution de commandes de restitution de données multimédia.

### 6.2 Architecture du terminal

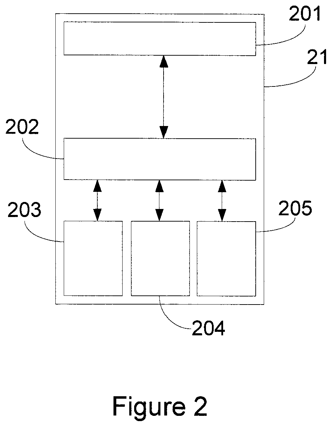

Selon l'invention, le terminal 11 comporte des moyens de communication avec la passerelle 10. Ces moyens de communication induisent une architecture particulière pour ce terminal. Un exemple d'architecture de terminal est illustré en figure 2.

Ce terminal 21 comprend :
- un module de communication 201, permettant au terminal 21 de communiquer avec la passerelle 10. Ce module réceptionne les requêtes et les commandes en provenance du serveur et transmet les réponses du terminal 21 à la passerelle 10. Ce module peut par exemple communiquer selon les normes « BlueTooth », « Wifi », « Ethernet », infrarouge,...
- un module 202 de traitement des commandes de restitution des données multimédia nommé « client dispatcher ». Ce module réceptionne les commandes du module de communication 201 et les distribue aux différents organes de pilotage des fonctions du terminal de communication. Ces organes de pilotage peuvent être :
- un organe de gestion de l'affichage graphique 203 du terminal ;
- un organe de gestion du clavier 204 du terminal ;
- un organe de gestion du haut-parleur 205 du terminal.

Ces organes exécutent les ordres qui sont transmis par le «client dispatcher » 202.

Dans une variante de réalisation de l'invention, il est également possible que le terminal comprenne des logiciels ou des applications pilotables par la passerelle 10, comme par exemple la gestion d'un répertoire téléphonique.

Dans une autre variante de réalisation de l'invention, la passerelle 10 peut se passer des services du « client dispatcher » et communiquer directement ses instructions aux organes de pilotage ou aux applications présentes sur le terminal.

Par la suite, on présente notamment le cas particulier d'une passerelle 10 reliée au réseau Internet et communicant avec plusieurs terminaux de communication. Il est clair cependant que l'invention ne se limite pas à cette application particulière, mais peut également être mise en œuvre dans de nombreux autres domaines, et par exemple dans le secteur de la téléphonie mobile et plus généralement dans tous les cas où les objectifs listés par la suite sont intéressants.

### 6.3 Description d'un mode de réalisation

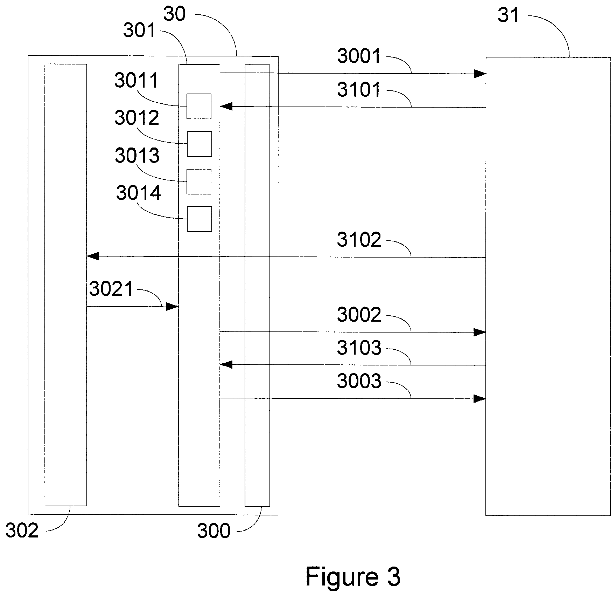

On présente, en relation avec la figure 3, un mode de réalisation du procédé de restitution de données graphiques transmises par une passerelle à un terminal de communication. On illustre ce mode de réalisation par des exemples de commandes et de réponses indiquées en italique à titre indicatif.

Le principe du mode de réalisation de ce système est le suivant :
- L'utilisateur active le terminal de communication 31 ;
- La passerelle domestique 30 initialise le terminal (commande *init*()) de communication 31 lors de son activation (réponse *init_result_event*) ;
- La passerelle 30 interroge 3001, via son serveur de gestion serveur de correspondances de librairies graphiques 301, et au travers de son serveur de communication 300, le terminal de communication 31 pour connaître ses capacités de restitution graphique (commande *get_command_list*()); La passerelle peut également interroger le terminal sur ses autres capacités de restitution, à l'aide d'autres serveur de gestion de correspondance de librairies multimédia ;
- Le terminal 31 formule une réponse 3101 sous la forme d'une liste de commandes graphiques qu'il est en mesure d'accepter (réponse *get_command_list_result_event*);
- Le serveur 301 stocke cette liste de commandes acceptées par le terminal 3011 ;
- Le serveur 301 constitue une table d'interpolation 3012 des commandes non reconnues par le terminal à partir de la liste des commandes simples 3011.

Il est aussi possible, dans un autre mode de réalisation, que la passerelle demande au terminal un identifiant de constructeur et de modèle. Dans ce cas, le terminal renvoie ces deux informations. La passerelle aurait alors la charge, par le biais d'une connexion Internet par exemple, de récupérer dans une base de données, l'ensemble des capacités de restitution du terminal, ainsi qu'une table d'interpolation déjà constituée pour ce terminal.
- Le serveur 301 constitue ensuite une table de statistiques 3013 de temps d'exécution de chaque commande par le terminal ;
- Le serveur 301 constitue encore une table de commandes en cours d'exécution 3014 afin de connaître précisément l'état des commandes sur le terminal ;

L'environnement nécessaire à la restitution est alors en place.

Dans un autre mode de réalisation, la table de statistiques 3013 peut être transmise pré-remplie à la passerelle 30, par le biais d'une connexion Internet par exemple, afin de tirer partie des expériences de mesures précédentes des performances des différentes commandes.

Dans un second temps, le terminal 31 requiert (3102) à la passerelle le rendu graphique d'une application, par exemple par l'appui d'une touche sur le terminal.
- La passerelle 30, à l'aide de son serveur d'application 302 :
   - exécute la partie du programme nécessaire au rendu graphique ;
   - envoi une liste de commandes 3021 de restitution au serveur de correspondances de librairies graphiques 301,
- La passerelle 30, à l'aide du serveur de correspondances de librairies graphiques 301 :
   - convertit les commandes complexes à l'aide de la table d'interpolation 3012. La conversion peut tenir compte du débit disponible entre la passerelle et le terminal, ainsi que des temps d'exécution moyens constatés à l'aide du tableau de statistiques 3013. La conversion peut par exemple consister en une transformation d'un cercle en un ensemble de points ;
   - met à jour la table de commandes en cours d'exécution 3014 avec l'ensemble des commandes issues de l'interpolation ;
   - transmet 3002 au terminal les commandes permettant de commander la restitution des données graphiques sur le terminal ;
- Le terminal 31 :
   - Exécute les commandes transmises par la passerelle ;
   - Transmet 3103 des acquittements pour signifier de la bonne exécution des commandes ou des notifications d'erreur si l'exécution des commandes n'est pas possible ;
- Lors de la réception de ces acquittements, la passerelle 30, à l'aide de serveur de correspondances de librairies graphiques 301 :
   - Met à jour le temps d'exécution mesuré de chaque commande dans la table des statistiques 3013 ;
   - Retire chaque commande correctement exécutée de la liste des commandes en cours d'exécution ;
   - Retransmet 3003 les commandes qui n'ont pas pu être exécutées précédemment.

Dans un mode de réalisation alternatif de l'invention, il est possible que le serveur de correspondances de librairies graphiques 301 envoie les commandes de restitution graphique au terminal une à une. Dans ce cas de figure, il attend la réception de l'acquittement du terminal pour transmettre la commande suivante, et ainsi de suite jusqu'à l'exécution de l'ensemble des commandes prévues. Cette mise en oeuvre est particulièrement bien adaptée pour les terminaux possédant des capacités très faibles.

Il est également possible de coupler les deux mises en œuvres précédentes en une nouvelle, qui autorise le serveur de correspondances de librairies graphiques 301 à s'adapter dynamiquement au terminal 31 en fonction, par exemple, d'un nombre d'erreurs reçues dépassant un certain seuil et/ou en mettant en œuvre une nouvelle table des statistiques de retour d'erreur, et/ou des capacités à un instant donné du terminal et/ou de l'état courant du canal de transmission.

Dans une variante de réalisation de l'invention, il est également possible de ne pas implémenter le serveur d'application 302 au sein de la passerelle 30 et d'utiliser un serveur distant, présent sur le réseau Internet par exemple, pour exécuter les applications.

### 6.4 Description du serveur de communication

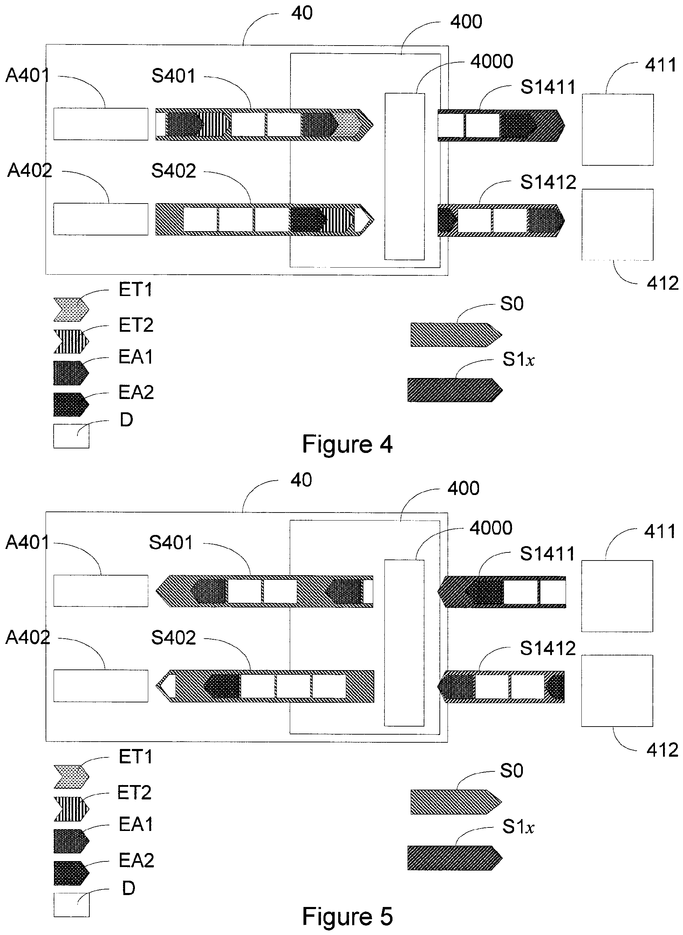

On présente, en relation avec la figure 4, un mode de réalisation du protocole du serveur de communication 400 servant à faire parvenir des commandes à un ou plusieurs terminaux 41x à partir de la passerelle 40.

Dans cette représentation, la passerelle 40 exécute en son sein deux applications A401 et A402. Chacune de ces applications communique schématiquement sous la forme d'un canal de communication réservé Sx « socket ». S401 est le canal de communication de l'application A401 et S402 est le canal de communication de l'application A402. Chaque application fait circuler des données à destination du serveur de communication 400 « dispatcher » dans son propre canal de communication. Il est également envisageable que les applications ne partagent qu'un seul canal de communication à destination du serveur 400.

Les données transmises par chaque application dans son canal sont dénommées trames. Ces trames sont composées de :
- Un entête d'application EA*ₓ* ;
- Un entête de terminal ET*ₓ* ;
- Des données propres, découpées en paquets D.

Dans cette représentation, il y a deux types d'entêtes d'application EA1 et EA2 correspondant chacun à l'application A401 et A402. Il y a également deux type d'entête de terminaux ET1 et ET2 correspondant chacun à l'application 411 et 412.

Le « dispatcher » 400 possède plusieurs interfaces de communication S1*x* lui permettant de transmettre des données aux terminaux. Ces interfaces de communications peuvent par exemple être de type BlueTooth, Wifi, Ethernet ou infrarouge. Dans notre représentation, le « dispatcher » a activé deux interfaces
- S1411 entre la passerelle 40 et le terminal 411 ;
- S1412 entre la passerelle 40 et le terminal 412.

Le procédé de distribution des informations et des données aux terminaux est le suivant :
- Chaque application A401 et A402 envoie des trames ayant 2 entêtes et des données :
   - Le premier entête identifie le client destinataire du message et contient l'identifiant du terminal ;
   - Le deuxième entête identifie l'application expéditrice du message.
- Le « dispatcher »réceptionne ces trames et identifie le terminal destinataire grâce au premier entête ;
- Il supprime ce premier entête afin de minimiser le volume des données à transmettre ;
- Il envoie la trame restante, c'est-à-dire le deuxième entête et les données au destinataire souhaité, en passant par l'interface de communication correspondante ;
- Le terminal destinataire analysera les trames reçues et identifiera l'application grâce à l'entête d'application.

Dans un autre mode de réalisation, il est possible de laisser l'entête du terminal dans la trame expédiée par le dispatcher au terminal afin, éventuellement, de pallier les problèmes liés à la présence de deux terminaux identiques connecté à un même instant *t* à la passerelle.

Encore dans un autre mode de réalisation, il est envisageable de ne pas inclure d'entête d'application et/ou d'entête de terminal dans les trames de données lorsqu'il n'y a par exemple, qu'un seul terminal connecté à la passerelle, ou que la passerelle n'exécute qu'une seule application.

Le renvoi d'informations (acquittements, réponses aux requêtes) de la part des terminaux fonctionne selon le même principe, comme illustré en figure 5, à la différence que les terminaux peuvent ne pas inclure l'entête identifiant le terminal dans les trames retournées au serveur 400.

### 6.5 Description des trames de données et des commandes

Le transfert d'information entre la passerelle et les terminaux est défini par le principe des trames de données comportant des entêtes permettant d'identifier les destinataires respectifs des paquets de données de la trame. Dans un mode particulier de réalisation de l'invention, lié à la restitution des données graphiques, on distingue deux types de paquets :
- Les commandes : Paquets envoyés par le serveur de correspondances de librairies graphiques au terminal qui se décomposent en trois catégories :
   - Commande sans réponse : requêtes simples ne demandant pas de réponse de la part du terminal ;
   - Commande avec réponse : requêtes nécessitant une réponse de la part du terminal (sous forme d'événement réponse) ;
   - Commande avec acquittement : requêtes demandant un acquittement de la part du terminal.

La plupart des commandes sont de type « avec réponse » ou « avec acquittement ».
- Les événements : Paquets envoyés par le terminal au serveur de correspondances de librairies graphiques qui se décomposent en trois catégories :
   - Évènement réponse : cette catégorie d'événements est utilisée par le terminal pour répondre aux commandes avec réponses. Ils servent également d'acquittement pour ces commandes ;
   - Évènement autonome : évènements qui ne sont rattachés à aucune commande et qui décrivent en général l'état du terminal ou une action de l'utilisateur sur le terminal (code touche, etc...) ;
   - Les acquittements : Paquets minimaux envoyés par le terminal au serveur de correspondances de librairies graphiques pour acquitter une commande avec acquittement.

Le modèle de fonctionnement retenu dans ce mode de réalisation est un modèle maître-esclave. Le serveur de correspondance de librairie graphique est le maître et le terminal est l'esclave avec la possibilité pour celui-ci d'envoyer des évènements autonomes. Ainsi, le terminal ne peut envoyer un paquet qui demande une réponse de la part du serveur de correspondance de librairie graphique. C'est le serveur qui demande des acquittements au terminal.

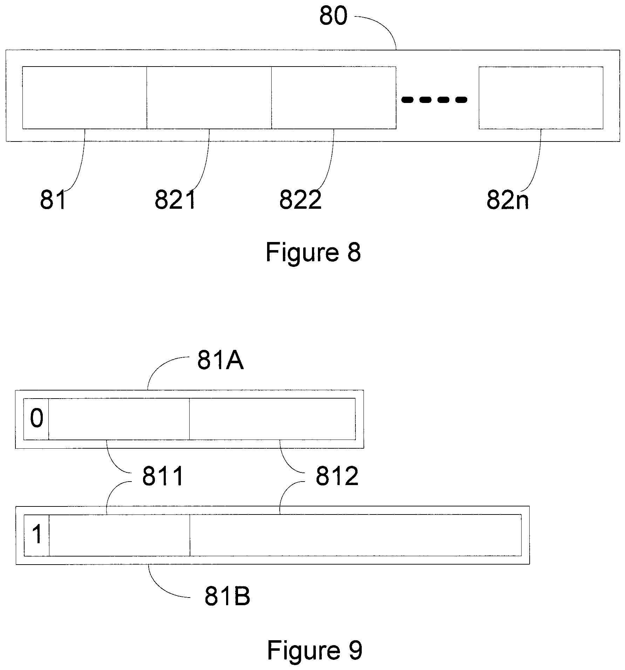

On présente, en relation avec les figures 8 et 9, la structure des paquets de commandes ainsi que la structure des entêtes des commandes.

Les paquets de commande 80 sont définis par :
- un entête 81 de longueur variable afin de diminuer les ressources nécessaires selon les commandes à envoyer. Par exemple, pour une commande *pixel* ne nécessitant que deux paramètres (*x*, *y*), l'entête de requête sera court.
- Un nombre déterminé de paramètres 82x, en fonction de la commande contenue dans le paquet.

Dans cette implémentation, la longueur totale des paramètres est un nombre entier d'octets, défini dans l'entête 81. La longueur de chaque paramètre est également un nombre entier d'octets. Certains paramètres peuvent se découper en sous paramètres, auquel cas, la signification de chaque bit des octets correspondants est définie.

L'entête 81 est composé :
- d'un code d'opération dénommé « opCode » 811, représenté sur un octet dont le premier bit de l'opCode (0 ou 1) permet de distinguer les deux types d'entête, ce qui permet de gérer :
   - 128 commandes courtes, ne nécessitant pas ou peu de paramètre (entête 81A). Le champ longueur des paramètres 812 est donc long de 1 octet.
   - 32 commandes longues, qui demandent un nombre de paramètres important (entête 81B) Le champ longueur des paramètres est donc 812 long de 2 octets.
- d'un nombre entier d'octets (1 ou 2), dépendant de la valeur du premier bit de l'opCode ;

Une liste non exhaustive des commandes courtes pouvant être traitées par le terminal est la suivante :

| **Commande** | **op Code** | **Résumé de la description de la commande** |
|---|---|---|
| *init* | 0x00 | Initialisation du terminal |
| *standby_mode* | 0x01 | Activation / désactivation du mode veille |
| *display_mode* | 0x02 | Activation / désactivation du retro-éclairage |
| *set_color_mode* | 0x03 | Sélection du nombre de couleur de l'écran |
| *set_contrast* | 0x04 | Sélection du niveau de contraste de l'écran |
| *set_style* | 0x05 | Sélection de la couleur et du style de tracé |
| *draw_pixel* | 0x06 | Tracé d'un pixel |
| *draw_line* | 0x07 | Tracé d'une ligne |
| *draw_rect* | 0x08 | Tracé d'un rectangle vide |
| *fill_rect* | 0x09 | Tracé d'un rectangle plein |
| *draw_round_rect* | 0x0A | Tracé d'un rectangle arrondi vide |
| *fill_round_rect* | 0x0B | Tracé d'un rectangle arrondi plein |
| *draw_arc* | 0x0C | Tracé d'un arc d'ellipse |
| *fill_arc* | 0x0D | Tracé d'une portion d'ellipse pleine (secteur angulaire) |
| *fill_triangle* | 0x0E | Tracé d'un triangle plein |
| *get_font_info* | 0x0F | Demande les dimensions caractéristiques de la police spécifiée |
| *copy_area* | 0x10 | Recopie d'une zone rectangulaire de l'écran |
| *get_display_info* | 0x11 | Demande d'information sur l'afficheur du terminal |
| *refresh* | 0x12 | Force l'afficheur à prendre en compte le tracé dans le cas d'un afficheur double buffer |
| *set_clip* | 0x13 | Sélection de la zone de clipping |
| *get_terminal info* | 0x14 | Demande d'information sur le terminal |
| *get_battery_level* | 0x15 | Demande le niveau de charge de la batterie du terminal |
| *get_signal_level* en réception | 0x16 | Demande d'information sur la puissance du signal |
| *set_audio_gain* | 0x17 | Définit les niveaux sonores |
| *set_led* | 0x18 | Fixe l'état des diodes électroluminescentes |
| *get_command_list* | 0x19 | Demande la liste des commandes supportées |
| *close* | 0x1A | Termine la session |

Une liste non exhaustive des commandes longues pouvant être traitées par le terminal est la suivante :

| **Commande** | **opCode** | **Résumé de la description de la commande** |
|---|---|---|
| *draw_polyline* | 0x80 | Tracé de plusieurs segments adjacents |
| *draw_chars* | 0x81 | Affichage d'une chaîne de caractères |
| *set_area* | 0x82 | Affichage d'une image |
| *get_char_width* | 0x83 | Demande de la longueur en pixel d'une chaîne de caractères |
| *play_melody* | 0x84 | Lance la lecture d'une mélodie sur le terminal |
| *play_tone* | 0x85 | |

Une liste non exhaustive des « événements réponses » pouvant être retournés par le terminal est la suivante :

| **Evènements** | **code** | **Résumé de la description de l'événement** |
|---|---|---|
| init_result_event | 0x00 | Indique si le terminal est prêt ou non. |
| standby_mode_result_event standby_mode. | 0x01 | Indique le résultat de la commande |
| display_mode_result_event display_mode. | 0x02 | Indique le résultat de la commande |
| set_color_mode_result_event set_color_mode. | 0x03 | Indique le résultat de la commande |
| get_font_info_result_event | 0x0F | Retourne les dimensions caractéristiques de la police |
| get_display_info_result_event | 0x11 | Retourne les informations sur l'afficheur du terminal |
| get_terminal_info_result_event | 0x14 | Retourne les caractéristiques du terminal |
| get_battery_level_result_event | 0x15 | Retourne des informations sur l'état de charge de la batterie. |
| get_signal_level_result_event | 0x16 | Retourne la puissance du signal en réception. |
| get_command_list_result_event | 0x19 | Retourne la liste des commandes supportées. |
| get_char_width_result_event | 0x83 | Retourne la longueur de la chaîne en pixels |

Il clair que l'invention ne se limite pas à ces descriptions de mode de réalisation. Les commandes et les évènements réponses peuvent être largement complétés en fonction des caractéristiques des terminaux et des serveurs gérant les communications avec ces terminaux.

## Revendications

1. Procédé de restitution de données multimédia transmises par une passerelle (10) à un terminal de communication (11), via un premier canal de transmission (13), comprenant les étapes suivantes :
- interrogation (12) dudit terminal par ladite passerelle sur ses capacités de restitution desdites données multimédia ;
- transmission (14) à ladite passerelle par ledit terminal d'une liste de commandes de restitution qu'il est capable d'exécuter (102) ;
- transmission par ladite passerelle, audit terminal, d'une suite de commandes (15) de restitution faisant partie de ladite liste de commandes exécutables par le terminal, ladite suite de commandes étant représentative des données multimédia;
- restitution dans ledit terminal desdites données multimédia (106) à l'aide de ladite suite de commandes de restitution reçues.

2. Procédé de restitution de données multimédia selon la revendication 1,
**caractérisé en ce qu'**il comprend une étape de transformation d'au moins une commande complexe, non présente dans ladite liste, en au moins une commande présente dans ladite liste.

3. Procédé de restitution de données multimédia selon l'une quelconque des revendications 1 et 2, **caractérisé en ce qu'**il comprend une étape de sélection d'un ensemble d'au moins une commande à transmettre audit terminal, parmi au moins deux ensembles possibles d'au moins une commande permettant d'effectuer une opération prédéterminée.

4. Procédé de restitution de données multimédia selon la revendication 3,
**caractérisé en ce que** ladite étape de sélection tient compte de statistiques permettant de déterminer l'ensemble de commandes présentant la meilleure performance selon un critère prédéterminé.

5. Procédé de restitution de données multimédia selon la revendication 4,
**caractérisé en ce que** ledit critère prédéterminé tient compte d'une information représentative d'un niveau d'activité dudit terminal.

6. Procédé de restitution de données multimédia selon l'une quelconque des revendications 4 et 5,
**caractérisé en ce que** ledit critère prédéterminé tient compte d'une information représentative dudit premier canal de transmission courant et/ou d'une information représentative d'un débit utile disponible entre ladite passerelle et ledit terminal.

7. Procédé de restitution de données multimédia selon l'une quelconque des revendications 4 à 6,
**caractérisé en ce qu'**il comprend au moins deux étapes de restitution des données multimédia respectivement pour au moins deux terminaux de manière simultanée.

8. Passerelle (10) destinée à communiquer avec au moins un terminal (11) comprenant des moyens de restitution de données multimédia transmises par ladite passerelle, comprenant:
- des moyens d'interrogation dudit terminal par ladite passerelle sur ses capacités de restitution desdites données multimédia ;
- des moyens de transmission, audit terminal, d'au moins une suite de commandes de restitution (15) faisant partie d'une liste de commandes de restitution (102) exécutables par le terminal, fournie préalablement par ce dernier, ladite suite de commandes étant représentative des données multimédia.

9. Passerelle selon la revendication 8, **caractérisée en ce qu'**elle comprend des moyens de conversion d'au moins une commande non présente dans ladite liste en au moins une commande présente dans ladite liste.

10. Passerelle selon l'une quelconque des revendications 8 et 9, **caractérisée en ce qu'**elle comprend des moyens de sélection d'un ensemble d'au moins une commande à transmettre audit terminal, parmi au moins deux ensembles possibles d'au moins une commande permettant d'effectuer une opération prédéterminée.

11. Terminal (11) comprenant des moyens de restitution de données multimédia transmises par une passerelle (10), comprenant :
- des moyens de réception d'une interrogation émise par ladite passerelle et relative aux capacités de restitution dudit terminal ;
- des moyens de transmission à ladite passerelle d'une liste de commandes de restitution qu'il est capable d'exécuter (102),
- des moyens de réception d'une suite de commandes de restitution (15), émise par ladite passerelle, faisant partie de la liste de commandes de restitution, ladite suite de commandes étant représentative des données multimédia.

12. Produit programme d'ordinateur téléchargeable depuis un réseau de communication et/ou stockable sur un support lisible par ordinateur, le produit étant adapté pour, lorsque exécuté par un microprocesseur, effectuer des instructions de code de programme pour
- la réception dans un terminal (11) d'une interrogation émise par une passerelle (10) de transmission de données multimédia et relative aux capacités de restitution dudit terminal ;
- la transmission à ladite passerelle par ledit terminal d'une liste de commandes de restitution qu'il est capable d'exécuter (102) ; et
- la réception, en provenance de la passerelle, par ledit terminal d'une suite de commandes de restitution (15) faisant partie de la liste de commandes de restitution, ladite suite de commandes étant représentative de données multimédia à restituer.

13. Produit programme d'ordinateur téléchargeable depuis un réseau de communication et/ou stockable sur un support lisible par ordinateur, le produit étant adapté pour, lorsque executé par un microprocesseur, effectuer des instructions de code de programme pour :
- l'interrogation d'un terminal (11) par une passerelle (10) de transmission de données multimédia sur ses capacités de restitution desdites données multimédia ;
- la transmission par ladite passerelle, audit terminal, d'au moins une suite de commandes de restitution (15) faisant partie d'une liste de commandes de restitution (102) exécutables par le terminal, fournie préalablement par ce dernier, ladite suite de commandes étant représentative des données multimédia.

## Patentansprüche

1. Verfahren zum Wiederherstellen von Multimediadaten, die durch ein Gateway (10) über einen ersten Übertragungskanal (13) an ein Kommunikationsendgerät (11) übertragen werden, das die folgenden Schritte umfasst:
- Abfragen (12) des Endgeräts durch das Gateway bezüglich seiner Kapazitäten für die Wiederherstellung der Multimediadaten;
- Übertragen (14) an das Gateway durch das Endgerät einer Liste von Wiederherstellungsbefehlen, die es ausführen kann (102);
- Übertragen durch das Gateway einer Folge von Wiederherstellungsbefehlen (15), die einen Teil der Liste der durch das Endgerät ausführbaren Befehle bilden, wobei die Folge von Befehlen Multimediadaten repräsentiert;
- Wiederherstellen in dem Endgerät der Multimediadaten (106) mit Hilfe der Folge empfangener Wiederherstellungsbefehle.

2. Verfahren zum Wiederherstellen von Multimediadaten nach Anspruch 1, **dadurch gekennzeichnet, dass** es einen Schritt des Transformierens wenigstens eines komplexen Befehls, der nicht in der Liste vorhanden ist, in wenigstens einen in der Liste vorhandenen Befehl umfasst.

3. Verfahren zum Wiederherstellen von Multimediadaten nach einem der Ansprüche 1 und 2, **dadurch gekennzeichnet, dass** es einen Schritt des Auswählens einer Gesamtheit aus wenigstens einem an das Endgerät zu übertragenden Befehl aus wenigstens zwei möglichen Gesamtheiten aus wenigstens einem Befehl, der das Ausführen einer vorgegebenen Operation ermöglicht, umfasst.

4. Verfahren zum Wiederherstellen von Multimediadaten nach Anspruch 3, **dadurch gekennzeichnet, dass** der Auswahlschritt Statistiken berücksichtigt, die ermöglichen, die Gesamtheit von Befehlen, die gemäß einem vorgegebenen Kriterium die beste Leistung bieten, zu bestimmen.

5. Verfahren zum Wiederherstellen von Multimediadaten nach Anspruch 4, **dadurch gekennzeichnet, dass** das vorgegebene Kriterium Informationen, die einen Aktivitätsgrad des Endgeräts repräsentieren, berücksichtigt.

6. Verfahren zum Wiederherstellen von Multimediadaten nach einem der Ansprüche 4 und 5, **dadurch gekennzeichnet, dass** das vorgegebene Kriterium Informationen, die den ersten aktuellen Übertragungskanal repräsentieren, und/oder Informationen, die einen Nutzdurchsatz, der zwischen dem Gateway und dem Endgerät verfügbar ist, repräsentieren, berücksichtigt.

7. Verfahren zum Wiederherstellen von Multimediadaten nach einem der Ansprüche 4 bis 6, **dadurch gekennzeichnet, dass** es wenigstens zwei Schritte des gleichzeitigen Wiederherstellens von Multimediadaten für wenigstens zwei entsprechende Endgeräte umfasst.

8. Gateway (10), das dazu bestimmt ist, mit wenigstens einem Endgerät (11) zu kommunizieren, das Mittel zum Wiederherstellen von Multimediadaten, die durch das Gateway übertragen werden, enthält, das Folgendes umfasst:
- Mittel zum Abfragen des Endgeräts durch das Gateway bezüglich seiner Kapazitäten zum Wiederherstellen von Multimediadaten;
- Mittel zum Übertragen an das Endgerät wenigstens einer Folge von Wiederherstellungsbefehlen (15), die einen Teil einer Liste von durch das Endgerät ausführbaren Wiederherstellungsbefehlen (102), die vorher an dieses Letztere geliefert worden sind, bilden, wobei die Folge von Befehlen Multimediadaten repräsentiert.

9. Gateway nach Anspruch 8, **dadurch gekennzeichnet, dass** es Mittel zum Umsetzen wenigstens eines nicht in der Liste vorhandenen Befehls in wenigstens einen in der Liste vorhandenen Befehl umfasst.

10. Gateway nach einem der Ansprüche 8 und 9, **dadurch gekennzeichnet, dass** es Mittel zum Auswählen einer Gesamtheit aus wenigstens einem an das Endgerät zu übertragenden Befehl aus wenigstens zwei möglichen Gesamtheiten aus wenigstens einem Befehl, der die Ausführung einer vorgegebenen Operation ermöglicht, umfasst.

11. Endgerät (11), das Mittel zum Wiederherstellen von Multimediadaten enthält, die durch ein Gateway (10) übertragen werden, und das Folgendes umfasst:
- Mittel zum Empfangen einer Abfrage, die von dem Gateway gesendet wird und auf die Wiederherstellungskapazitäten des Endgeräts bezogen ist;
- Mittel zum Übertragen an das Gateway einer Liste von Wiederherstellungsbefehlen, die es ausführen kann (102),
- Mittel zum Empfangen einer Folge von Wiederherstellungsbefehlen (15), die durch das Gateway gesendet wird und die einen Teil der Liste von Wiederherstellungsbefehlen bildet, wobei die Folge von Befehlen Multimediadaten repräsentiert.

12. Computerprogrammprodukt, das aus einem Kommunikationsnetz fernladbar ist und/oder auf einem computerlesbaren Träger speicherbar ist, wobei das Produkt dafür ausgelegt ist, dann, wenn es durch einen Mikroprozessor ausgeführt wird, Programmcodebefehle auszuführen zum:
- Empfangen bei dem Endgerät (11) einer Abfrage, die durch das Gateway (10) gesendet wird, zum Übertragen von Multimediadaten und bezüglich der Wiederherstellungskapazitäten des Endgeräts;
- Übertragen an das Gateway durch das Endgerät einer Liste von Wiederherstellungsbefehlen, die es ausführen kann (102); und
- Empfangen von dem Gateway durch das Endgerät einer Folge von Wiederherstellungsbefehlen (15), die einen Teil der Liste von Wiederherstellungsbefehlen bildet, wobei die Folge von Befehlen wiederherzustellende Multimediadaten repräsentiert.

13. Computerprogrammprodukt, das von einem Kommunikationsnetz fernladbar ist und/oder auf einem computerlesbaren Träger speicherbar ist, wobei das Produkt dafür ausgelegt ist, dann, wenn es durch einen Mikroprozessor ausgeführt wird, Programmcodebefehle auszuführen zum:
- Abfragen eines Endgeräts (11) durch ein Gateway (10) zum Übertragen von Multimediadaten bezüglich seiner Kapazitäten zum Wiederherstellen von Multimediadaten; und
- Übertragen durch das Gateway an das Endgerät wenigstens einer Folge von Wiederherstellungsbefehlen (15), die einen Teil einer Liste von Wiederherstellungsbefehlen (102) bildet, die durch das Endgerät ausführbar sind und im Voraus durch dieses Letztere geliefert worden sind, wobei die Folge von Befehlen Multimediadaten repräsentiert.

## Claims

1. Method for rendering multimedia data transmitted by a gateway (10) to a communication terminal (11), via a first transmission channel (13), comprising the following steps:
- interrogation (12) of said terminal by said gateway about its capacity for rendering said multimedia data;
- transmission (14) to said gateway by said terminal of a list of rendering commands that it is capable of executing (102);
- transmission by said gateway to said terminal of a sequence of rendering commands (15) forming part of said list of commands executable by the terminal, said sequence of commands being representative of the multimedia data;
- rendering said multimedia data (106) in said terminal using said sequence of rendering commands received.

2. Method for rendering multimedia data according to Claim 1, **characterized in that** it comprises a step of converting at least one complex command, not present on said list, into at least one command present on said list.

3. Method for rendering multimedia data according to either of Claims 1 and 2, **characterized in that** it comprises a step of selecting a set of at least one command to be transmitted to said terminal, from at least two possible sets of at least one command for performing a predetermined operation.

4. Method for rendering multimedia data according to Claim 3, **characterized in that** said selection step takes into account statistics for determining the set of commands having the best performance according to a predetermined criterion.

5. Method for rendering multimedia data according to Claim 4, **characterized in that** said predetermined criterion takes into account information representative of a level of activity of said terminal.

6. Method for rendering multimedia data according to either of Claims 4 and 5, **characterized in that** said predetermined criterion takes into account information representative of said first current transmission channel and/or information representative of a useful throughput available between said gateway and said terminal.

7. Method for rendering multimedia data according to any of Claims 4 to 6, **characterized in that** it comprises two or more steps of rendering multimedia data for at least two terminals, respectively, in a simultaneous manner.

8. Gateway (10) intended to communicate with at least one terminal (11) comprising means for rendering multimedia data transmitted by said gateway, comprising:
- means for the interrogation of said terminal by said gateway about its capacity for rendering said multimedia data;
- means for the transmission to said terminal of at least one sequence of rendering commands (15) forming part of a list of rendering commands (102) executable by the terminal and supplied in advance by the terminal, said sequence of commands being representative of the multimedia data.

9. Gateway according to Claim 8, **characterized in that** it comprises means for converting at least one complex command, not present on said list, into at least one command present on said list.

10. Gateway according to either of Claims 8 and 9, **characterized in that** it comprises means for selecting a set of at least one command to be transmitted to said terminal, from at least two possible sets of at least one command for performing a predetermined operation.

11. Terminal (11) comprising means for rendering multimedia data transmitted by a gateway (10), comprising:
- means for receiving an interrogation transmitted by said gateway and relating to the rendering capacity of said terminal;
- means for transmitting to said gateway a list of rendering commands that it is capable of executing (102) ;
- means for receiving a sequence of rendering commands (15), transmitted by said gateway, forming part of the list of rendering commands, said sequence of commands being representative of the multimedia data.

12. Computer program product which can be downloaded from a communication network and/or stored on a computer-readable medium, the product being capable of carrying out program code instructions, when executed by a microprocessor, for:
- the reception in a terminal (11) of an interrogation transmitted by a multimedia data transmission gateway (10) and relating to the rendering capacity of said terminal;
- the transmission to said gateway by said terminal of a list of rendering commands that it is capable of executing (102); and
- the reception from the gateway, by said terminal, of a sequence of rendering commands (15) forming part of the list of rendering commands, said sequence of commands being representative of multimedia data to be rendered.

13. Computer program product which can be downloaded from a communication network and/or stored on a computer-readable medium, the product being capable of carrying out program code instructions, when executed by a microprocessor, for:
- the interrogation of a terminal (11) by a multimedia data transmission gateway (10) about its capacity for rendering said multimedia data;
- the transmission by said gateway to said terminal of at least one sequence of rendering commands (15) forming part of a list of rendering commands (102) executable by the terminal, supplied in advance by the latter, said sequence of commands being representative of the multimedia data.
